# EUROPÄISCHE PATENTSCHRIFT

(11) **EP 0 555 761 B1**
(45) Veröffentlichungstag und Bekanntmachung des Hinweises auf die Patenterteilung: **17.04.1996**
(21) Anmeldenummer: 93101683.6
(22) Anmeldetag: 04.02.1993
(51) Int. Cl.: F02M 35/02, F02M 35/04

(54) **Positioniereinrichtung für Luftfilter**
Positioning device for air filters
Dispositif de positionnement pour filtres à air

(30) Priorität: 11.02.1992 DE 4203864
(43) Veröffentlichungstag der Anmeldung: 18.08.1993
(73) Patentinhaber: DEERE & COMPANY, Moline, Illinois 61265 (US)
(72) Erfinder: Teich, Michael, W-6800 Mannheim 24 (DE)
(74) Vertreter: Feldmann, Bernhard

(56) Entgegenhaltungen:
- US-A- 2 062 548
- US-A- 2 076 304
- US-A- 4 006 000
- US-A- 4 265 647

## Beschreibung

Die Erfindung betrifft eine Positioniereinrichtung für das Luftfilter einer Fahrzeugbrennkraftmaschine, wobei das Luftfilter im wesentlichen aus einem Aufnahmeteil und einem topfartigen, einen Filtereinsatz aufnehmenden Gehäuse besteht. Das einseitig offene Aufnahmeteil weist wenigstens einen Rohlufteinlaß und/oder einen Reinluftauslaß auf. Das Gehäuse ist mit seiner offenen Seite an der Öffnungsseite des Aufnahmeteils befestigbar.

Aus der US-A-4,006,000 ist ein Luftfilter mit einem im wesentlichen zylindrischen Gehäuse bekannt, bei dem ein Rohlufteinlaß tangential am Gehäuse angeordnet ist. In dem Gehäuse befindet sich ein Filtereinsatz, der radial durchströmt wird. Das Gehäuse selbst ist über einen Bajonettverschluß an einem zylinderförmigen Ansaugluftsammler anschließbar. In diesem Ansaugluftsammler befindet sich eine Sicherheitspatrone, die bei einem Wechseln des Filtereinsatzes das Eindringen von Schmutz und Staub in den Ansaugluftstutzen verhindern soll. Eine Abdichtung zwischen der Sicherheitspatrone und dem Filtereinsatz erfolgt dadurch, daß nach dem Einrasten des Bajonettverschlusses eine axiale Verschiebung des Filtereinsatzes in Richtung der Sicherheitspatrone durch eine Verstellschraube vorgenommen wird, so daß die Stirnseite des Filtereinsatzes an der Stirnseite der Sicherheitspatrone zur Anlage kommt. Durch diese axiale Verschiebung wird gleichzeitig der Bajonettverschluß verriegelt.

Ferner wird in der älteren deutschen Patentanmeldung P 40 34 216.6 ein Ansaugluftfilter für eine Brennkraftmaschine beschrieben, bei dem ein Filtereinsatz in einem topfförmigen Gehäuse angeordnet ist. Das Gehäuse läßt sich stirnseitig an einem Befestigungsteil zur Anlage bringen, welcher einen Überwurf trägt. Zur Befestigung des Gehäuses am Befestigungsteil wird der Überwurfring verdreht und greift im Sinne eines Bajonettverschlusses mit Gleitflächen hinter am Gehäuseumfang angeformte Nocken.

Während der Montage der beschriebenen Luftfilter können Probleme bei der Befestigung des Gehäuses an dem Aufnahmeteil entstehen, denn der Bajonettverschluß erfordert vor seiner Verriegelung durch Verdrehen ein genaues Ausrichten des Gehäuses zum Aufnahmeteil. Nur wenn die beiden Teile genau zueinander, nicht gegeneinander verkippt ausgerichtet und zur Anlage miteinander gebracht sind, läßt sich der Bajonettverschluß problemlos schließen.

Aufgabe der Erfindung ist es, eine Positioniereinrichtung für Luftfilter der eingangs genanten Art vorzuschlagen, durch die die genannten Probleme überwunden werden. Die Positioniereinrichtung soll eine genaue Ausrichtung des Gehäuses und des Aufnahmeteils zueinander ermöglichen, bevor beide miteinander verbunden werden. Ferner soll die Montage des kompletten Luftfilters an der Fahrzeugstruktur, beispielsweise an einem Fahrzeugrahmen, erleichtert werden.

Die Aufgabe wird erfindungsgemäß dadurch gelöst, daß an der Fahrzeugstruktur zwei im wesentlichen horizontal und zueinander parallel ausgerichtete Führungsstangen befestigt sind. Auf die Führungsstangen ist das Gehäuse und/oder das Aufnahmeteil in zueinander fluchtender Lage auflegbar. Gehäuse und Führungsteil lassen sich auf den Führungsstangen relativ zueinander axial verschieben, sofern sie noch nicht miteinander bzw. mit der Fahrzeugstruktur verbunden sind.

Die Führungsstangen können sich beispielsweise zwischen zwei sich gegenüberstehenden Blechteilen der Fahrzeugstruktur erstrecken und an diesen befestigt sein. Das im wesentlichen zylindrische Gehäuse sowie gegebenenfalls das Aufnahmeteil lassen sich bei der Montage oder nach einem Filterwechsel sehr einfach auf die Führungsstangen auflegen. Sie haben dann bereits die richtige axiale Ausrichtung zueinander und können zueinander verschoben werden. Durch Schließen eines Verschlusses, beispielsweise durch Verdrehen eines Bajonettringes, wird schließlich das Gehäuse dichtend mit dem Aufnahmeteil verbunden. Die erfindungsgemäße Lösung macht es zum einen möglich, daß das komplett montierte Ansaugfilter, im wesentlichen bestehend aus Aufnahmeteil und Gehäuse sowie gegebenenfalls einem Bajonettring bei der Erstmontage oder im Anschluß an Reparaturarbeiten komplett auf die Führungsstangen auflegbar und am Fahrzeugrahmen befestigbar ist. Zum anderen erlaubt die Lösung nach einem Filterwechsel oder nach einer Reparatur, zu der lediglich das Gehäuse abgenommen zu werden braucht, ein genaues Positionieren, Fügen und Schließen des Gehäuses relativ zum Aufnahmeteil, wobei geringe Montagetoleranzen eingehalten werden können. Während der Montage kann ein Verkanten des Gehäuses relativ zum Aufnahmeteil, das beispielsweise die Anwendung von Gewindeoder Bajonettverschlüssen erschweren würde, vermieden werden.

Die Montageerleichterung tritt besonders bei Luftfiltern ein, bei denen sich sowohl der Rohlufteinlaß als auch der Reinluftauslaß am Aufnahmeteil befinden. Beim Filterwechsel kann hierbei das Gehäuse mit dem Filtereinsatz sehr leicht vom Aufnahmeteil demontiert werden, ohne daß Schläuche oder dergleichen gelöst werden müssen.

Vorzugsweise sind an dem Gehäuse und/oder dem Aufnahmeteil Führungsmittel befestigt, über die sich das Gehäuse und/oder das Aufnahmeteil an den Führungsstangen abstützt. Als Führungsmittel eignen sich konzentrische Außenringe, deren Außendurchmesser größer ist als der Abstand der Führungsstangen, und über die sich das Gehäuse und/oder das Aufnahmeteil auf den Stangen abstützen. Bei einem im wesentlichen zylindrisch ausgebildeten Gehäuse und/oder einem im wesentlichen zylindrisch ausgebildeten Aufnahmeteil lassen sich die konzentrischen Außenringe problemlos anbringen. Durch die Verwendung gleichgroßer Außenringe beim Aufnahmeteil und beim Gehäuse ergibt sich automatisch eine Zentrierung dieser beiden Luftfiltergehäuseteile. Diese lassen sich auf den Führungsstangen und parallel zu diesen verschieben. Beim Zusammenbau des Luftfilters können sie aufeinander zu bewegt und beispielsweise durch den Bajonettring miteinander verbunden werden.

Besonders vorteilhaft ist es, wenn an dem Gehäuse und/oder an dem Aufnahmeteil wenigstens ein hakenförmiger Ansatz vorgesehen ist, der über die bezüglich der Montagerichtung vordere Führungsstange greift. In diesem Fall kann entweder das Gehäuse, das Aufnahmeteil oder das gesamte Luftfilter bei der Montage über den Ansatz in die vordere Führungsstange eingehängt und dann um eine Auflage im Ansatz so weit nach hinten geschwenkt werden, bis das Gehäuse, das Aufnahmeteil oder das gesamte Luftfilter, gegebenenfalls mittels eines weiteren hinteren Ansatzes, auf der hinteren Führungsstange aufliegt. Die Montage gestaltet sich hierbei sehr einfach, zuverlässig und zeitsparend.

Für eine besonders einfache Festlegung des Aufnahmeteils an der Fahrzeugstruktur sieht eine bevorzugte Ausgestaltung der Erfindung vor, daß wenigstens eine Führungsstange in einem Endbereich ein Gewinde aufweist, auf das eine Flanschmutter aufschraubbar ist. Das Gewindeende erstreckt sich durch ein Teil der Fahrzeugstruktur nach außen und trägt eine Mutter.

Durch Anziehen der Flanschmutter und der Mutter läßt sich ein Ansatz des Aufnahmeteils zwischen der Fahrzeugstruktur und der Flanschmutter einklemmen.

Vorzugsweise weist wenigstens ein nach unten offener hakenförmiger Ansatz des Gehäuses auf seiner dem Aufnahmeteil zugewandten Seite eine zylinderförmige Ausnehmung auf, die in montiertem Zustand des Luftfilters konzentrisch zu der zugehörigen Führungsstange ausgerichtet und durch einen Schlitz nach unten offen ist, wobei der Schlitz das Einfädeln der Führungsstange bei der Montage ermöglichen soll. Auf der zugehörigen Führungsstange ist ein Gummizylinder befestigt, der bei geschlossenem, montiertem Luftfilter in die Ausnehmung eingreift und das Gehäuse gegen ein Abheben von der Führungsstange sichert.

Für den Fall, daß das Ansaugfiltergehäuse zwischen dem Aufnahmeteil und dem Gehäuse eine unmittelbare Bajonettverbindung aufweist, die sich durch relatives Verdrehen des Gehäuses zum Aufnahmeteil verschließen läßt, ist einer weiteren Ausgestaltung der Erfindung zufolge die Ausnehmung in dem hakenförmigen Ansatz in Umfangsrichtung so lang ausgebildet, daß sie beim Verschließen während des Verdrehens des Gehäuses die Führungsstange einschließt.

Sind beispielsweise die den beiden Führungsstangen zugeordneten Ansätze mit in Umfangsrichtung langen Schlitzen versehen, so umgreifen die Ansätze nach dem Verdrehen und Schließen des Gehäuses um die Führungsstangen. Damit ist das Gehäuse an den Führungsstangen festgelegt. Eine zusätzliche Sicherung ist entbehrlich.

Da zwischen Führungsstange und Ausnehmung ein Spiel besteht, tragen die Führungsstangen im Bereich der Ansätze vorzugsweise Gummihülsen, durch die metallisches Anschlagen vermieden und eine Geräuschdämpfung erreicht wird.

Weitere vorteilhafte Ausgestaltungen und Weiterbildungen der Erfindung gehen aus den Unteransprüchen hervor.

Anhand der Zeichnung, die zwei Ausführungsbeispiele der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die Prinzipskizze eines Luftfilters in zusammengebautem Zustand in einem Längsschnitt,
- Fig. 2: eine erste Ausgestaltung einer erfindungsgemäßen Positioniereinrichtung für ein Luftfilter in schematischer perspektivischer Darstellung,
- Fig. 3: eine teilweise im Schnitt dargestellte Seitenansicht der Positioniereinrichtung gemäß Fig. 2 mit geöffnetem Luftfilter,
- Fig. 4: eine der Fig. 3 entsprechende Darstellung mit geschlossenem Luftfilter,
- Fig. 5: eine zweite Ausgestaltung einer erfindungsgemäßen Positioniereinrichtung für ein Luftfilter in schematischer perspektivischer Darstellung,
- Fig. 6: eine schematische stirnseitige Darstellung der Befestigungseinrichtung gemäß Fig. 5 in geöffneter Stellung,
- Fig. 7: eine der Fig. 6 entsprechende Darstellung in geschlossener Stellung,
- Fig. 8: den Querschnitt durch einen hakenförmigen Ansatz des Gehäuses nach Fig. 2,
- Fig. 9: einen hakenförmigen Ansatz des Aufnahmeteils gemäß Fig. 2 oder Fig. 5 in perspektivischer Darstellung und
- Fig. 10: den hakenförmigen Ansatz gemäß Fig. 9 im Längsschnitt.

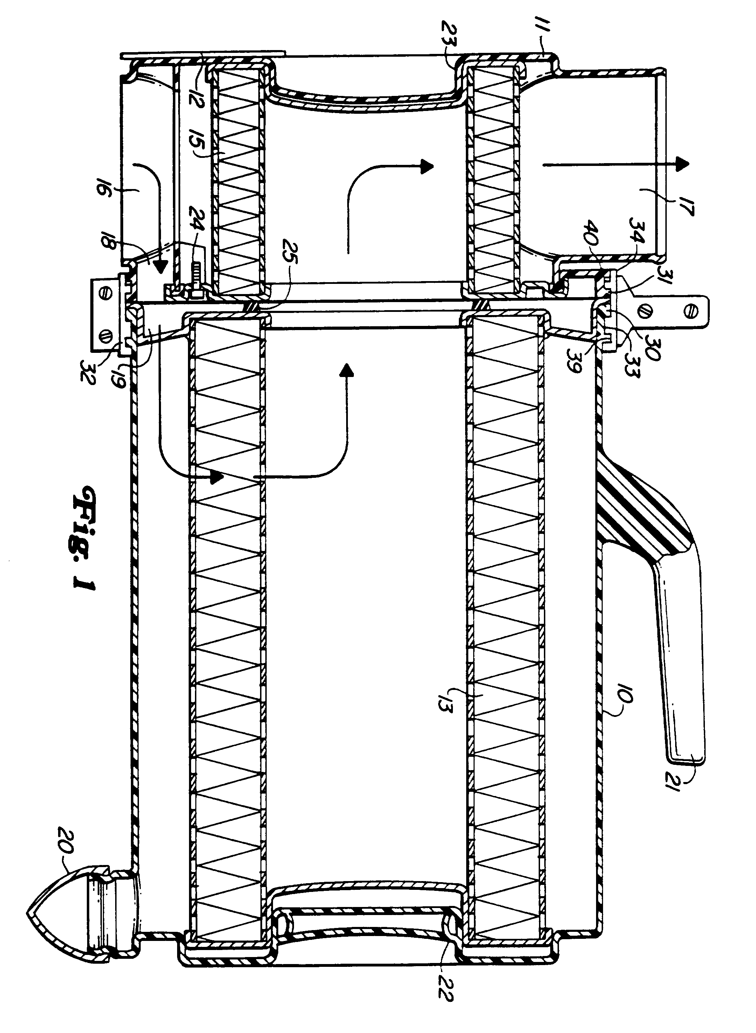

Das Luftfilter gemäß Fig. 1 besteht im wesentlichen aus zwei Elementen, einem Aufnahmeteil 11 und einem Gehäuse 10. Das Gehäuse 10, das einen austauschbaren Filtereinsatz 13 aufnimmt, ist an dem Aufnahemteil 11 befestigbar. Innerhalb des Aufnahmeteils 11 befindet sich eine Sicherheitspatrone 15, durch die beim Austauschen des Filtereinsatzes 13 das Eindringen von Schmutz in die Ansaugluftseite verhindert wird.

Sowohl das Gehäuse 10 als auch das Aufnahmeteil 11 sind im wesentlichen zylindrisch und topfförmig ausgebildet. Der Rohlufteinlaß 16 und der Reinluftauslaß 17 befinden sich an dem Aufnahmeteil 11. Die Rohluft strömt in Pfeilrichtung über den Rohlufteinlaß 16 in die äußere Kammer 18 des Aufnahmeteils 11, und von dort über ein Axialzyklon 19 in die äußere Kammer des Gehäuses 10. Nachdem die Luft den Filtereinsatz 13 passiert hat, strömt diese über die Sicherheitspatrone 15 zu dem Reinluftauslaß 17.

Das Gehäuse 10 ist mit einem Staubaustragventil 20 sowie mit einem Haltegriff 21 versehen. Der Filtereinsatz 13 ist an seinem geschlossenen Ende auf einen im Gehäuse vorgesehenen Ansatz 22 mit radialer Vorspannung aufgesteckt. Auch die Sicherheitspatrone 15 ist in dem Aufnahmeteil 11 auf einem Ansatz 23 fixiert, wobei die Sicherheitspatrone 15 zusätzlich noch über eine Schraubverbindung 24 an dem Aufnahmeteil 11 befestigt ist, so daß gewährleistet ist, daß die Sicherheitspatrone 15 nicht beim Entfernen des Gehäuses 10 herausfällt. An der offenen Stirnseite des Filtereinsatzes 13 befindet sich eine Radialdichtung 25. Diese dichtet den Zwischenraum zwischen Filtereinsatz 13 und Sicherheitspatrone 15 ab. Eine solche Abdichtung zeigt eine hohe Betriebssicherheit, insbesondere auch bei Erschütterungen. Es ist jedoch auch ersichtlich, daß diese Art der Abdichtung nicht geeignet ist, Scherkräfte aufzunehmen. Deshalb erfolgt die Befestigung des Gehäuses 10 an dem Aufnahmeteil 11 lediglich durch eine axiale Bewegung des Gehäuses 10 und eine axiale Verspannung.

Das Gehäuse 10 sowie das Aufnahmeteil 11 tragen im Bereich der zusammenzufügenden Stirnflächen an ihrem jeweiligen Umfang Nocken 30, 31, die über den gesamten Umfang gleichmäßig verteilt sind. Die Nocken 30, 31 werden von einem Bajonett- oder Überwurfring 32 umschlossen. An diesem Überwurfring 32 sind keilförmig verlaufende Flächen (Gleitflächen 33, 34) vorgesehen, die ebenfalls an mehreren über den gesamten Umfang verteilten Stellen angeordnet sind. Ein Schwenken des Überwurfrings 32 in Umfangsrichtung bewirkt in Verbindung mit den Nocken 30, 31 und den Gleitflächen 33, 34 eine Befestigung des Gehäuses 10 an dem Befestigungsteil 11. Diese bajonettartige Befestigungsart vermeidet bei der Montage sowohl eine Drehbewegung als auch eine radiale Bewegung des Gehäuses 10, so daß keinerlei Scherwirkung auf die Radialdichtung 25 ausgeübt wird.

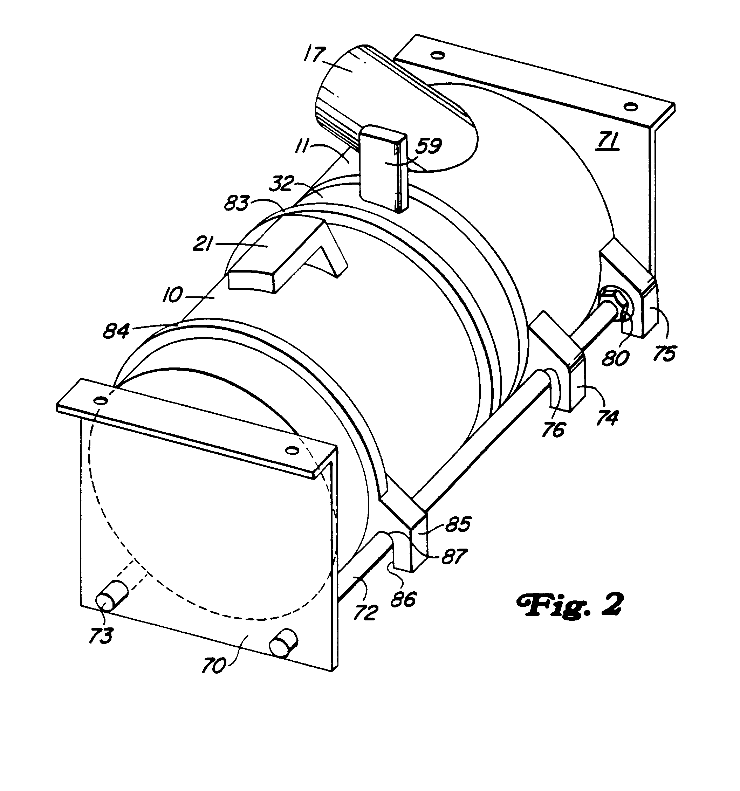

Aus Fig. 2 geht eine erste Ausgestaltung einer erfindungsgemäßen Positioniereinrichtung für Luftfilter hervor. Zwischen zwei sich parallel gegenüberstehenden Seitenblechen 70, 71, die Teile eines nicht näher dargestellten Fahrzeugrahmens sind, erstrecken sich zwei horizontal ausgerichtete, zueinander parallel verlaufende Stangen 72, 73, auf denen ein Ansaugluftfilter aufliegt. Die Stangen 72, 73 sind mit dem gemäß Fig. 2 linken Seitenblech 70 starr verbunden, während am rechten Seitenblech 71 Schraubverbindungen vorgesehen sind.

Das Luftfilter besteht im wesentlichen aus einem Gehäuse 10, einem Aufnahmeteil 11 und einem als Bajonettverschluß dienenden Überwurfring 32, der einen hervorstehenden Hebel 59 trägt, durch den sich der Überwurfring 32 zum Schließen oder Öffnen des Luftfilters verdrehen läßt. Am Aufnahmeteil 11 ist der Reinluftauslaß 17 erkennbar. Am Gehäuse 10 ist ein Haltegriff 21 zur Erleichterung der Montage befestigt.

Das im wesentlichen zylindrisch ausgebildete Aufnahmeteil 11 trägt auf seiner Mantelfläche beidseits und etwas unterhalb seiner Zylinderachse je zwei hakenförmig ausgebildete nach unten offene Ansätze 74, 75, von denen in Fig. 2 lediglich die beiden vorderen dargestellt sind. Die Ansätze 74, 75 umgreifen die Führungsstangen 72, 73 und stützen das Aufnahmeteil 11 mit ihren jeweils oben liegenden zylinderförmigen Halbschalen 76, 77 auf den Führungsstangen 72, 73 ab.

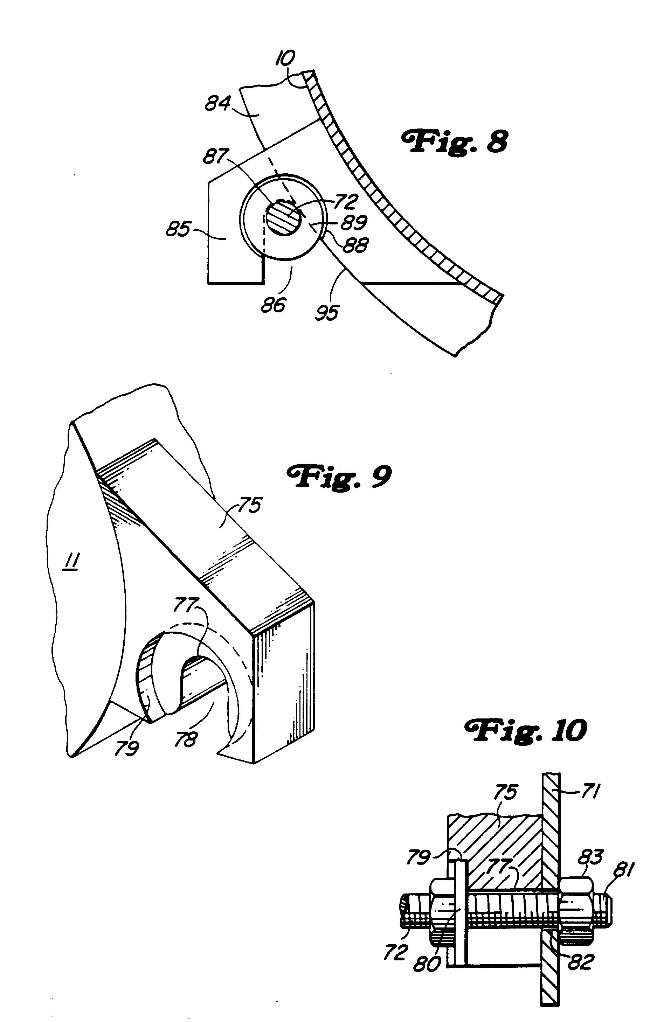

Während die in der Nähe des Überwurfringes 32 befindlichen Ansätze 74 lediglich der Abstützung des Aufnahmeteils 11 auf den Führungsstangen 72, 73 dienen, erfüllen die Ansätze 75, die an der dem Seitenblech 71 zugewandten Seite des Aufnahmeteils 11 angeordnet sind, sowohl eine Abstützfunktion als auch eine Befestigungsfunktion. Einer der letzt genannten Ansätze 75 ist in Fig. 9 vergrößert und perspektivisch dargestellt. Aus der Schnittdarstellung der Fig. 10 geht hingegen das Zusammenwirken zwischen der Führungsstange 72, dem Ansatz 75 und dem Seitenblech 71 in montiertem Zustand hervor.

Der Ansatz 75 gemäß Fig. 9 und 10 weist einen nach unten offenen Schlitz 78 auf, der oben in einer zylinderförmigen Halbschale 77, mit der der Ansatz 75 auf der Führungsstange 72 aufliegt, endet und sich unten aufweitet, um ein leichteres Einfädeln der Führungsstange 72 bei der Montage des Luftfilters zu ermöglichen. Auf der dem Seitenblech 71 abgewandten Seite hat der Ansatz 75 eine konzentrisch zur Halbschale 77 ausrichtete Ausdrehung 79. In diese Ausdrehung 79 greift in montiertem Zustand der scheibenförmige Flanschbereich einer auf die Führungsstange 72 aufschraubbaren Flanschmutter 80 ein. Das freie, mit einem Gewindeabschnitt versehene Ende 81 der Führungsstange 72 erstreckt sich durch eine Bohrung 82 des Seitenblechs 71 hindurch. Durch Aufdrehen einer Mutter 83 auf das freie Ende 81 der Führungsstange 72 und durch Verdrehen der Flanschmutter 80 läßt sich der Ansatz 75 zwischen Flanschmutter 80 und Seitenblech 71 einspannen.

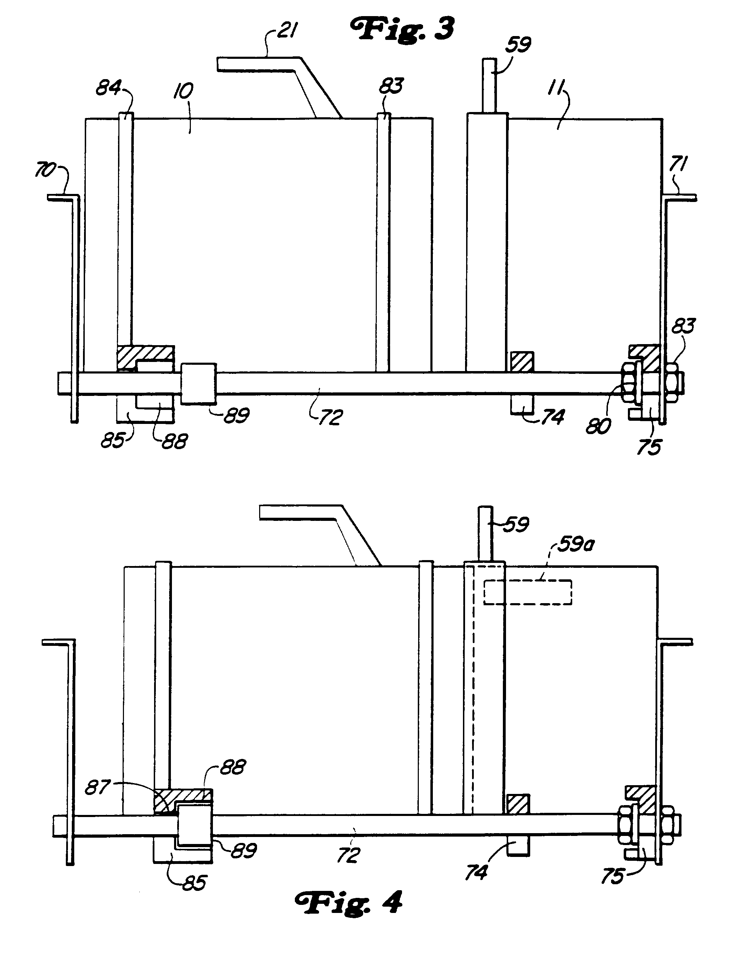

Der Mantel des im wesentlichen zylindrisch ausgebildeten Gehäuses 10 (Fig. 2) trägt zwei konzentrische Außenringe 83, 84, deren Außendurchmesser größer ist als der Abstand der Führungsstangen 72, 73. Über diese beiden Außenringe 83, 84 stützt sich das Gehäuse 10 auf den Führungsstangen 72, 73 derart ab (Fig. 8), daß es konzentrisch zum Aufnahmeteil 11 ausgerichtet ist. Im Bereich des zum Aufnahmeteil 11 weiter entfernt liegenden Außenrings 84 sind beidseits an der Mantelfläche des Gehäuses 10 nach unten offene hakenförmige Ansätze 85 angeformt, von denen in Fig. 2 jedoch nur der vordere sichtbar ist. Der Ansatz 85, der in Fig. 8 aus der Blickrichtung vom Aufnahmeteil 11 aus im Schnitt dargestellt ist, weist einen nach unten offenen Schlitz 86 auf, der oben in einer zylinderförmigen Halbschale 87 endet. Der Schlitz 86 weitet sich nach unten auf. Auf seiner dem Gehäuse 10 zugewandten Seite 95 hat er die gleiche zylindrische Kontur wie der Außenring 84. Auf der dem Aufnahmeteil 11 zugewandten Seite hat der Ansatz 85 eine konzentrisch zur zylindrischen Kontur der Halbschale 87 ausgerichtete Ausdrehung 88. In diese Ausdrehung 88 greift in montiertem Zustand ein auf der Führungsstange 72 festgelegter Gummizylinder 89 ein, wie es aus Fig. 4 hervorgeht.

Bei der Montage des Luftfilters auf der Positioniereinrichtung wird folgenderweise verfahren:

Das komplett montierte Luftfilter, bestehend aus Aufnahmeteil 11, Gehäuse 10 und Überwurfring 32 wird an dem Haltegriff 21 aufgenommen und so in die Position achsparallel über die Führungsstangen 72, 73 gebracht, daß die vorderen, in Fig. 2 sichtbaren Ansätze 74, 75 und 85 über die vordere Führungsstange 72 greifen und die Halbschalen 76, 77, 87 und die Ringe 83, 84 auf der Führungsstange 72 aufliegen. Hierbei ist darauf zu achten, daß das Luftfilter gemäß Fig. 2 oder Fig. 3 möglichst weit zur linken Seite angeordnet wird, damit die Gummizylinder 89 nicht das Einführen der Führungsstangen 72, 73 in die Schlitze 86 behindern. Die Flanschmuttern 80 sind weit nach links zurückgeschraubt. Nach dem Anlegen des Luftfilters wird dieses um die auf der Führungsstange 72 aufliegenden Halbschalen 76, 77, 87 so weit nach hinten verschwenkt, bis es mit seinen Ringen 83, 84 bzw. mit den hinteren in Fig. 2 nicht sichtbaren Ansätzen auf der hinteren Führungsstange 73 aufliegt. Anschließend läßt sich das komplette Luftfilter auf den Führungsstangen nach rechts verschieben, bis es gegen das rechte Seitenblech 71 stößt. Dabei werden die Gummizylinder 89 von den Ausdrehungen 88 aufgenommen, wie es aus Fig. 4 hervorgeht. Jetzt läßt sich das Gehäuse 10 nicht mehr von den Führungsstangen 72, 73 nach oben abheben, da die Ansätze 85 mit ihren nach unten engeren Schlitzen 86 die Gummizylinder 89 umgreifen (siehe Fig. 8). Schließlich werden die Flanschmuttern 80 so weit verdreht, bis ihre Flanschbereiche in die Ausdrehungen 79 der Ansätze 75 eingreifen. Ferner werden die Muttern 83 an den Enden der Führungsstangen 72, 73 angezogen, so daß die Ansätze 75 zwischen den Flanschmuttern 80 und dem Seitenblech 71 eingespannt sind. Damit ist das Luftfilter am Fahrzeugchassis befestigt. Der Anschluß des Rohlufteinlasses 16 und des Reinluftauslasses 17 wurde hier nicht näher erläutert.

Für eine Reinigung oder einen Austausch des Filtereinsatzes braucht nicht das gesamte Luftfilter demontiert zu werden. Hierfür genügt es, den Überwurfring 32 zu verdrehen und damit das Gehäuse 10 von dem Aufnahmeteil 11 zu lösen. Nun kann das Gehäuse 10 so weit nach links verschoben werden, bis die Gummizylinder 89 aus dem Eingriffsbereich der Ansätze 85 gelangen, wie es aus Fig. 3 hervorgeht. Das Gehäuse 10 mit dem Filtereinsatz 13 wird jetzt abgehoben, und der Filtereinsatz 13 wird entnommen und ausgetauscht oder gereinigt. Der Wiedereinbau des Gehäuses 10 erfolgt analog in umgekehrter Reihenfolge. Zum Verdrehen des Überwurfringes 32 dient der Hebel 59, der bei geöffnetem Bajonettring 32 in den Bereich einer nicht dargestellten Motorhaube eingreift und verhindert, daß sich die Motorhaube schließen läßt, solange das Luftfilter nicht verschlossen ist. Erst nach dem Verdrehen des Überwurfringes 32 und Schließen des Luftfilters mittels des Hebels 59 läßt sich dieser umlegen (wie es in Fig. 4 gestrichelt bei 59a dargestellt ist), so daß das Schließen der Motorhaube möglich ist.

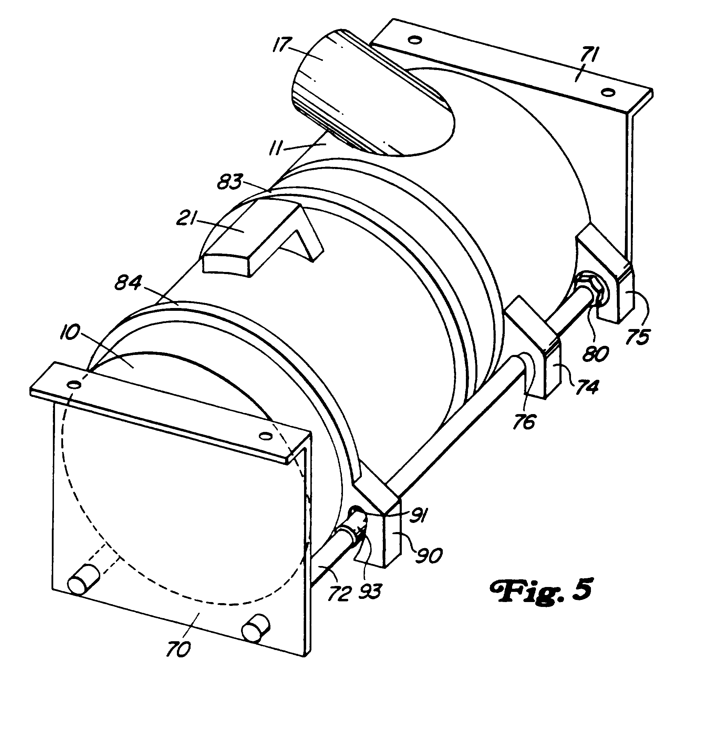

Die Fig. 5 zeigt eine zweite Ausführungsform einer erfindungsgemäßen Positioniereinrichtunq für ein Luftfilter. Sich entsprechende Bauteile der beiden Ausführungsformen wurden mit den selben Bezugszeichen belegt.

Im Unterschied zum in Fig. 2 dargestellten Luftfilter werden bei dem Luftfilter gemäß Fig. 5 das Aufnahmeteil 11 und das Gehäuse 10 nicht durch einen als Bajonettring ausgebildeten Überwurfring 32 miteinander verbunden. Hier sind Aufnahmeteil 11 und Gehäuse 10 unmittelbar mit Bajonettverbindungen versehen. Das Gehäuse 10 wird bei der Montage koaxial an das Aufnahmeteil 11 herangeführt und durch Verdrehen auf das Aufnahmeteil 11 aufgeschraubt.

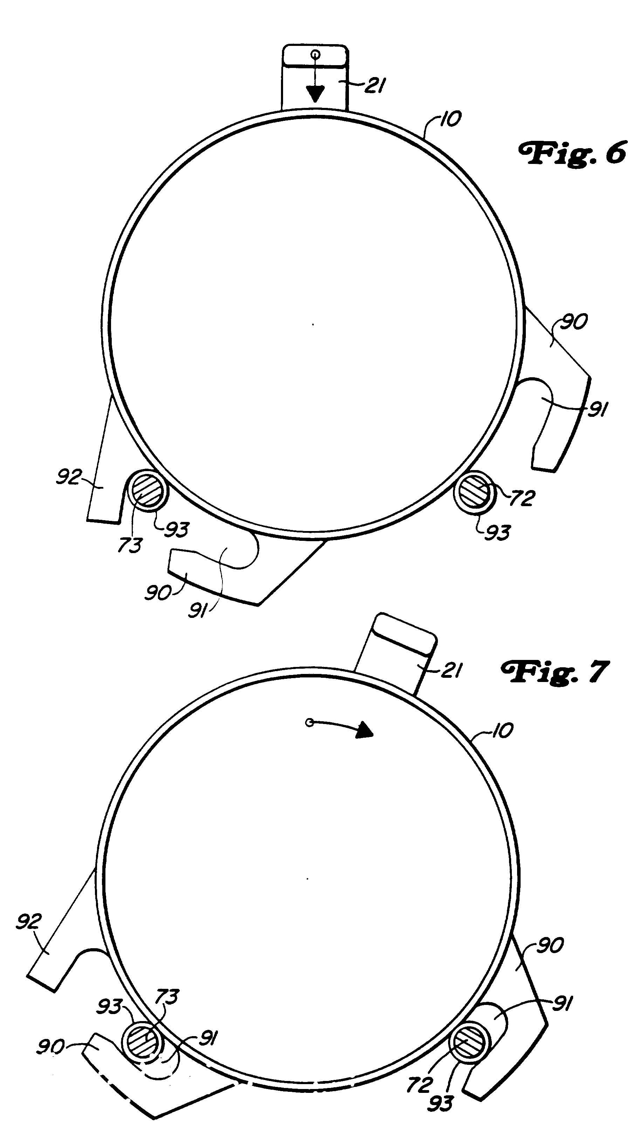

Bei dieser Ausführungsform kann die Befestigung des Aufnahmeteils 11 auf den beiden Führungsstangen 72, 73 grundsätzlich auf gleiche Weise erfolgen, wie es bereits anhand der Fig. 2, 8 und 9 beschrieben wurde. Die Ansätze 90 des Gehäuses 10 sind jedoch bei der zweiten Ausführungsform mit relativ langen, sich in Umfangsrichtung erstreckenden Schlitzen 91 versehen (Fig. 6 und 7), die ein Verdrehen des Gehäuses 10 für die Herstellung der Bajonettverbindung erlauben, bei der die Führungsstangen 72, 73 innerhalb der Schlitze 91 der Ansätze 90 verbleiben. Fig. 6 zeigt eine Stirnansicht des Gehäuses 10 in geöffneter Stellung, in der ein Abheben des Gehäuses 10 von den Führungsstangen 72, 73 möglich ist. Die hintere Führungsstange 73 liegt an einem als Verdrehanschlag ausgebildeten weiteren Ansatz 92 an, so daß eine Verdrehung des Gehäuses 10 entgegen dem Uhrzeigersinn nicht möglich ist. Beim Verdrehen des Gehäuses 10 im Uhrzeigersinn, bei der der Bajonettverschluß eingreift, umfassen die hakenförmig ausgebildeten Ansätze 90 die Führungsstangen 72, 73 und fangen diese ein. Jetzt ist das Gehäuse 10 auf den Führungsstangen 72, 73 festgelegt. Um Toleranzen auszugleichen und Klappergeräusche zu vermeiden, sind die Führungsstangen 72, 73 im Bereich der Ansätze 90 mit Gummi 93 überzogen.

Die Montage des Luftfilters gemäß Fig. 5 erfolgt in analoger Weise wie die Montage des Luftfilters gemäß Fig. 2.

## Patentansprüche

1. Positioniereinrichtung für das Luftfilter einer Fahrzeugbrennkraftmaschine, wobei das Luftfilter im wesentlichen aus einem einseitig offenen Aufnahmeteil (11), das wenigstens einen Rohlufteinlaß (16) und/oder einen Reinluftauslaß (17) aufweist, und einem topfartigen, einen Filtereinsatz (13) aufnehmenden Gehäuse (10), das mit seiner offenen Seite an der Öffnungsseite des Aufnahmeteils (11) befestigbar ist, besteht, dadurch gekennzeichnet, daß an der Fahrzeugstruktur (70, 71) wenigstens zwei im wesentlichen horizontal und zueinander parallel ausgerichtete Führungsstangen (72, 73) befestigbar sind, auf die das Gehäuse (10) und/oder das Aufnahmeteil (11) in zueinander fluchtender Lage auflegbar und relativ zueinander axial verschiebbar sind.

2. Positioniereinrichtung nach Anspruch 1, dadurch gekennzeichnet, daß das Gehäuse (10) und/oder das Aufnahmeteil (11) Führungsmittel enthalten, über die sich das Gehäuse (10) und/oder das Aufnahmeteil (11) an den Führungsstangen (72, 73) abstützt.

3. Positioniereinrichtung nach Anspruch 2, dadurch gekennzeichnet, daß das Gehäuse (10) und/oder das Aufnahmeteil (11) als Führungsmittel dienende Konzentrische Außenringe (83, 84) mit gleichen Außendurchmessern aufweisen, wobei die Außendurchmesser größer sind als der Abstand der beiden Führungsstangen (72, 73).

4. Positioniereinrichtung nach Anspruch 2 oder 3, dadurch gekennzeichnet, daß das Gehäuse (10) und/oder das Aufnahmeteil (11) im wesentlichen zylindrisch ausgebildet sind.

5. Positioniereinrichtung nach einem der Ansprüche 1 bis 4, dadurch gekennzeichnet, daß das Gehäuse (10) und/ oder das Aufnahmeteil (11) seitlich wenigstens einen nach unten offenen hakenförmigen Ansatz (74, 75, 85) aufweist, der bei montiertem Luftfilter von oben über eine zugehörige Führungsstange (72, 73) greift.

6. Positioniereinrichtung nach einem der Ansprüche 1 bis 5, dadurch gekennzeichnet, daß wenigstens eine Führungsstange (72, 73) an wenigstens einem Ende einen Gewindeabschnitt aufweist, auf den Befestigungsmittel (80, 83) zum Festschrauben an einem Bauteil (71) der Fahrzeugstruktur aufschraubbar sind.

7. Positioniereinrichtung nach Anspruch 6, dadurch gekennzeichnet, daß zwischen zwei auf den Gewindeabschnitt aufgeschraubten Muttern (80, 83) das Bauteil (71) der Fahrzeugstruktur und ein mit dem Aufnahmeteil (11) verbundener Ansatz (75) eingespannt sind.

8. Positioniereinrichtung nach einem der Ansprüche 5 bis 7, dadurch gekennzeichnet, daß wenigstens ein nach unten offener hakenförmiger Ansatz (85) des Gehäuses (10) auf seiner dem Aufnahmeteil (11) zugewandten Seite eine zylinderförmige Ausnehmung (88) aufweist, die in montiertem Zustand des Luftfilters konzentrisch zu der zugehörigen Führungsstange (72, 73) ausgerichtet und durch einen Schlitz (86) nach unten offen ist, und daß auf der zugehörigen Führungsstange (72, 73) ein Gummizylinder (89) befestigt ist, der bei geschlossenem, montiertem Luftfilter in die Ausnehmung (88) eingreift.

9. Positioniereinrichtung nach einem der Ansprüche 1 bis 8, dadurch gekennzeichnet, daß das Aufnahmeteil (11) und das Gehäuse (10) sich durch einen Bajonettverschluß verbinden lassen.

10. Positioniereinrichtung nach Anspruch 9, dadurch gekennzeichnet, daß das Aufnahmeteil (11) an seiner dem Gehäuse (10) zugewandten Öffnung einen verdrehbaren Bajonettring (32) trägt, der durch Verdrehen mit Nokken (30) des Gehäuses (10) im Sinne eines Bajonettverschlusses zusammenwirkt.

11. Positioniereinrichtung nach einem der Ansprüche 1 bis 9, dadurch gekennzeichnet, daß sich das Gehäuse (10) durch Verdrehen auf das Aufnahmeteil (11) aufschrauben oder im Sinne eines Bajonettverschlusses befestigen läßt.

12. Positioniereinrichtung nach Anspruch 11, dadurch gekennzeichnet, daß wenigstens ein hakenförmiger Ansatz (90) des Gehäuses (10) so lang ausgebildet ist, daß sich die Führungsstangen (72, 73) während der Befestigungsverdrehung im Eingriffsbereich des hakenförmigen Ansatzes (90) befinden.

13. Positioniereinrichtung nach Anspruch 12, dadurch gekennzeichnet, daß die Führungsstangen (72, 73) im Bereich des hakenförmigen Ansatzes (90) Gummihülsen (93) tragen.

## Claims

1. A positioning device for the air filter of the combustion engine of a vehicle, wherein the air filter essentially comprises a casing (11) open on one side, which has at least one raw air inlet (16) and/or a clean air outlet (17), and a pot-shaped housing (10) receiving a filter element (13) which may be fastened on its open side to the opening side of the casing (11), characterised in that at least two essentially horizontal and parallel guide rods (72, 73) may be fastened to the vehicle structure (70, 71), onto which guide rods the housing (10) and/or the casing (11) may be placed in a position flush to one another and may be axially displaceable relative to one another.

2. Positioning device according to Claim 1, characterised in that the housing (10) and/or the casing (11) contain guide elements, by means of which the housing (10) and/or the casing (11) are supported on the guide rods (72, 73).

3. Positioning device according to Claim 2, characterised in that the housing (10) and/or the casing (11) have concentric outer rings (83, 84) acting as guide elements, wherein the outside diameter is greater than the spacing between the two guide rods (72, 73).

4. Positioning device according to Claim 2 or 3, characterised in that the housing (10) and/or the casing (11) are substantially cylindrical in structure.

5. Positioning device according to one of Claims 1 to 4, characterised in that the housing (10) and/or the casing (11) have at least one hook-shaped projection (74, 75, 85) opening downwards on their side which engages from above via the associated guide rod (72, 73) when the air filter is assembled.

6. Positioning device according to one of Claims 1 to 5, characterised in that at least one guide rod (72, 73) has a threaded section at at least one end, onto which fastener means (80, 83) may be threaded for a tight screw connection to a component (71) of the vehicle structure.

7. Positioning device according to Claim 6, characterised in that the component (71) of the vehicle structure and a projection (75) connected to the casing (11) are clamped between two nuts (80, 83) threaded onto the threaded section.

8. Positioning device according to one of Claims 5 to 7, characterised in that at least one downwardly opening, hook-shaped projection (85) of the housing (10) has a cylindrical recess (88) on its side facing the casing (11), and said recess is aligned concentrically to the associated guide rod (72, 73) when the air filter is assembled and opens downwards through a slot (86); and that a rubber cylinder (89) is fastened to the associated guide rod (72, 73) and engages into the recess (88) when the air filter is closed and assembled.

9. Positioning device according to one of Claims 1 to 8, characterised in that the casing (11) and the housing (10) can be connected by means of a bayonet joint.

10. Positioning device according to Claim 9, characterised in that at its opening facing the housing (10), the casing (11) bears a rotatable bayonet ring (32), which by rotation cooperates with cams (30) of the housing (10) in the manner of a bayonet lock.

11. Positioning device according to one of Claims 1 to 9, characterised in that the housing (10) can be threaded onto casing (11) by rotation or fastened in the manner of a bayonet lock.

12. Positioning device according to Claim 11, characterised in that at least one hook-shaped projection (90) of the housing (10) is constructed with sufficient length so that the guide rods (72, 73) are located in the engagement region of the hook-shaped projection (90) during rotation for fastening.

13. Positioning device according to Claim 12, characterised in that the guide rods (72, 73) are provided with rubber sleeves (93) in the region of the hook-shaped projection (90).

## Revendications

1. Dispositif de positionnement pour le filtre à air d'un moteur à combustion interne de véhicule, dans lequel le filtre à air est constitué essentiellement par une partie formant logement (11) ouverte unilatéralement, qui possède au moins une entrée (16) pour l'air ambiant et/ou une sortie (17) pour l'air pur, et un boîtier (10) en forme de pot, qui loge un insert filtrant (13) et qui peut être fixé, par son côté ouvert, au côté, où se trouve l'ouverture, de la partie formant logement (11), caractérisé en ce que sur la structure (70,71) du véhicule peuvent être fixées au moins deux barres de guidage (72,73), qui sont sensiblement horizontales et parallèles l'une à l'autre et sur lesquelles le boîtier (10) et/ou la partie formant logement (13) peuvent être appliqués dans des positions réciproquement alignées et sont déplaçables axialement l'un par rapport à l'autre.

2. Dispositif de positionnement selon la revendication 1, caractérisé en ce que le boîtier (10) et/ou la partie formant logement (11) comportent des moyens de guidage, au moyen desquels le boîtier (10) et/ou la partie formant logement (11) prennent appui sur les barres de guidage (72,73).

3. Dispositif de positionnement selon la revendication 2, caractérisé en ce que le boîtier (10) et/ou la partie formant logement (11) comportent des bagues extérieures concentriques (83,84), qui servent de moyens de guidage et possèdent des diamètres extérieurs identiques, les diamètres extérieurs étant supérieurs à la distance entre les deux barres de guidage (72,73).

4. Dispositif de positionnement selon la revendication 2 ou 3, caractérisé en ce que le boîtier (10) et/ou la partie formant logement (11) sont agencés avec une forme essentiellement cylindrique.

5. Dispositif de positionnement selon l'une des revendications 1 à 4, caractérisé en ce que le boîtier (10) et/ou la partie formant logement (11) possèdent latéralement au moins un appendice saillant en forme de crochet (74,75,85) ouvert vers le bas, qui, lorsque le filtre à air est monté, s'accroche à partir du haut sur une barre de guidage associée (72,73).

6. Dispositif de positionnement selon l'une des revendications 1 à 5, caractérisé en ce qu'au moins une barre de guidage (72,73) possède, sur au moins une extrémité, une section filetée, sur laquelle des moyens de fixation (80,83) peuvent être vissés pour la fixation par vissage sur un composant (71) de la structure du véhicule.

7. Dispositif de positionnement selon la revendication 6, caractérisé en ce que le composant (71) de la structure du véhicule et un appendice saillant (75) relié à la partie formant logement (11) sont serrés entre deux écrous (80,83) vissés sur la section filetée.

8. Dispositif de positionnement selon l'une des revendications 5 à 7, caractérisé en ce qu'au moins un appendice saillant en forme de crochet (85), ouvert vers le bas, du boîtier (10) possède, sur son côté tourné vers la partie formant logement (11), un évidement de forme cylindrique (88), qui, lorsque le filtre à air est à l'état monté, est disposé concentriquement par rapport à la barre de guidage associée (72,73) et s'ouvre vers le bas sous la forme d'une fente (86), et que sur la barre de guidage associée (72,73) est fixé un cylindre en caoutchouc (89), qui s'engage dans l'évidement (88) lorsque le filtre à air est à l'état monté et fermé.

9. Dispositif de positionnement selon l'une des revendications 1 à 8, caractérisé en ce que la partie formant logement (11) et le boîtier (10) peuvent être réunis au moyen d'un système de fermeture à baïonnette.

10. Dispositif de positionnement selon la revendication 9, caractérisé en ce que la partie formant logement (11) porte, au niveau de son ouverture tournée vers le boîtier (10), une bague à baïonnette (32) que l'on peut faire tourner et qui, en tournant, coopère avec des ergots (30) du boîtier (10) dans le sens d'un système de fermeture à baïonnette.

11. Dispositif de positionnement selon l'une des revendications 1 à 9, caractérisé en ce qu'on peut visser ou fixer, dans le sens d'un système de fermeture à baïonnette, le boîtier (10), par rotation, sur l'élément formant logement.

12. Dispositif de positionnement selon la revendication 11, caractérisé en ce qu'au moins un appendice saillant en forme de crochet (90) du boîtier (10) est agencé avec une longueur telle que les barres de guidage (72,73) sont situées, pendant le mouvement de rotation pour la fixation, dans la zone d'engrènement de l'appendice saillant en forme de crochet (90).

13. Dispositif de positionnement selon la revendication 12, caractérisé en ce que les barres de guidage (72,73) portent des douilles en caoutchouc (93) dans la zone de l'appendice saillant en forme de crochet (90).
